Europäisches Patentamt

European Patent Office

Office européen des brevets

(11) Publication number: **0 282 198**
**A2**

(12) **EUROPEAN PATENT APPLICATION**

(21) Application number: **88301528.1**

(22) Date of filing: **23.02.88**

(51) Int. Cl.⁴: **H04L 11/20** , H04L 11/00

(30) Priority: **13.03.87 CA 531994**

(43) Date of publication of application:
**14.09.88 Bulletin 88/37**

(84) Designated Contracting States:
**AT DE ES FR GB IT NL SE**

(71) Applicant: **NORTHERN TELECOM LIMITED**
**600 de la Gauchetiere Street West**
**Montreal Quebec H3B 4N7(CA)**

(72) Inventor: **Terry, John Brian**
**R.R. No. 2**
**Carp Ontario K0A 1L0(CA)**
Inventor: **Vickers, Richard**
**60 Selwyn Place**
**Kanata Ontario K2K 1P2(CA)**
Inventor: **Trevitt, Stephen William**
**220 Britannia Road**
**Ottawa Ontario K2B 5X2(CA)**

(74) Representative: **Crawford, Andrew Birkby et al**
**A.A. THORNTON & CO. Northumberland**
**House 303-306 High Holborn**
**London WC1V 7LE(GB)**

(54) **Communications system and components and methods for use therein.**

(57) A communications system comprises a plurality or network of switching nodes (10,12,14,16,18,20,22) interconnected by transmission links, time division multiplexed signals (2ii,28) being transported between entry nodes (10) and egress nodes (22) as "transactions" comprising a header portion (F1-F2) and a message portion (F3-F4), which may comprise signalling. The header portion (F1-F2) comprises a sequence of node exist address (NEA) which occur in the order in which the nodes will be encountered as the signal traverses the network. In each node (10-20), the leading node exit address (NEA) determines the exit through which the signal will emerge from that node so as to reach the next node in the sequence. The entire sequence of node exit addresses (NEA) is generated by access apparatus (26) at the entry node (10), conveniently by accessing a routing database (46) by means of a unique address (DIA) of a destination interface (26A) connected to an exit of the egress node (22) to which an intended recipient is connected. The destination interface address (DIA) may conveniently be produced by accessing another look-up table (36) using the recipient's directory number (DIR.NUM).

FIG. I

# COMMUNICATIONS SYSTEM AND COMPONENTS AND METHODS FOR USE THEREIN

This invention relates to communications systems, to components used therein; and to methods of operating them. The invention is especially, but not exclusively, applicable to digital TDM (time division multiplex) telecommunications networks.

Digital telecommunications systems typically employ time division multiplexed (TDM) signals transported, through a network of switches located in switching centres or offices, in a temporary path extending between two users out of many. This temporary path, interconnecting the source and the recipient, is usually referred to as a "connection" and that is how the term will be used in this specification. In a typical system, incoming calls are multiplexed at a central office and routed via other offices to their destinations. The usual call sequence is that, prior to transmission of the user's information, a central control associated with a switch determines the connection i.e. a transmission path through the network interconnecting the sender and the recipient. The sender then transmits his information. When the call ends, the central control severs the connection i.e. removes the transmission path.

At present, there are in use three main categories of switched network; circuit-switched networks, packet data switched networks, and special services networks (e.g. tie-lines). Each such network is optimized to carry efficiently and economically one particular kind of signal. For example, the circuit-switched network is designed to carry voice signals (64 KHz digital) for an interval of a few minutes with low information transfer delay. The packet data switched network is designed to carry bursts of data that are relatively short, e.g. less than one second, which are relatively insensitive to delay. The special services network is designed to carry long interval (e.g. hours to years) point-to-point connections or the special signals that other networks cannot handle economically (e.g. wideband audio or video signals).

Each of these switched networks is limited in practice to the one type of signal for which it has been optimized. Thus, packet switched networks are generally unsuitable for voice applications because of switching delay and delay variations, e.g. due to store and forward switch operation and packet queueing at trunk buffers. Moreover, the packetization of voice incurs delay at the access to the packet switched network. Conventional circuit switching networks are generally unsuitable for packet data because switch connection establishment and removal would be required for each packet and the call set-up time is too long, compared with the duration of each packet, to permit conventional call control for controlling switch connections. Even if this situation could be tolerated by a user, such inefficient utilization of the system's capacity would be uneconomic.

Interworking of these disparate systems i.e. circuit-switched, packet, and special services, necessitates complex operational and managerial coordination, which are becoming more complex as new services, such as integrated voice/data, proliferate, since each new service will usually need its own management system.

Systems have been proposed which would integrate voice and data switching. The so-called "Fast Packet Switching", for example, as proposed by J.S. Turner in various patents listed in the appendix hereto, all of which are and incorporated herein by reference, including specifically U.S. patent No. 4,494,230, issued January 15, 1985, and assigned to AT&T Bell Laboratories, allows for switching voice, data, and some special services in a single switch.

Fast Packet Switching employs, in effect, a "link-by-link" routing scheme, i.e. which uses routing information derived at the intermediate nodes in the network. During a preliminary connection set-up phase, a connection set-up request, containing the destination address, is transmitted through the system, to the destination node, before any user information is transmitted. At each switching node, switch processors use the connection set-up request to determine the exit through which the signal should leave that node. The address of this exit is then stored in routing tables associated with incoming and outgoing ports of that node, together with a unique logical connection number. When each exit address has been determined in this way, a connection set-up confirmation signal is returned from the destination node to the originating node, by way of the same physical path as the connection set-up request.

Thereafter, the user information is transmitted in the form of a packet, the length of which is assigned at the beginning of each packet, prefixed by the header including the logical connection number. This user information follows the same path as the connection set-up request because, at each node, the logical connection number is used to address the routing table to give the exit via which the user information should leave that node.

Fast Packet Switching employs high speed packet transmission and reduces store and forward switch delay, thus decreasing overall network delay. In doing so, however it packetizes all signals at the access to the network and queues packets at trunk buffers. Hence delay and delay variations can still occur.

In another link-by-link packet switching - scheme, disclosed in U.S. patent number 4,488,288 by J.S. Turner, issued December 11, 1984, entitled "End-to-End Information Memory Arrangement in a Line Controller", (also incorporated herein by reference), physical node exit addresses are used in the packet's header in order to save memory and control apparatus which would be needed for logical-to-physical address translation functions at each node of the packet switching system. These physical addresses are obtained by transmitting a call set-up packet and call reply packet between the originating and destination line controllers. At each node, a central switch processor determines the physical exit address for that node and inserts it into the data part of the set-up packet. This routing address information is stored on arrival at the destination as the physical address information necessary to route subsequent packets from the destination point to the entry point. The destination point then transmits a call reply packet to the entry point. This call reply packet contains the physical address information to be inserted into subsequent "user" packets (as distinct from set-up/reply packets) to route them between the entry point and the destination point.

The passage of these call set-up and reply signals in a preliminary sequence throughout the entire network to derive the logical path routing information from the intermediate nodes, incurs delay and also requires that the routing information in each switch node cannot be updated independently of that in other nodes i.e. asynchronously.

Should a fault occur, in or of link or node of a link-by-link routing system, the entire preliminary set-up procedure must be repeated. If many logical paths are affected by the fault, a significant number of call set-up/reply packets would increase the likelihood of delay, or even loss, of end-to-end connection, due to congestion.

The deficiencies of link-by-link routing have been discussed in two publications concerning so-called "Source Routing", in packet networks, one by Carl A. Sunshine entitled "Source Routing in Computer Networks" ACM Computer Communications Review Vol. 7, No. I, January 1977 and the other J.H. Salter et al, entitled "Source Routing for Campus-Wide Interne transport" in Local Networks for Computer Communications published by North-Holland Publishing Company 1981. Both of these publications are incorporated herein by reference.

In various of the papers listed in the appendix hereto, (all of which are incorporated herein by reference and to which the reader is directed for reference) including especially one by S.R. Amstutz and R. Duane Packard entitled "Dispersed Control Architecture and Specification Compilation of Burst Switching", IEEE Conference on Software Engineering for Telecommunication Switching Systems, Eindhoven, 14-18 April 1986, there is disclosed a Burst Switching approach to telecommunications switching for passing voice and data through the same switching network.

Insofar as can be inferred from these papers, a Burst Switching Network employs link-by-link destination routing which is different from link-by-link logical connection routing because the burst header contains an explicit network destination address and not a logical connection number. This network destination address is determined in a preliminary separate connection set-up procedure similar to that employed by Fast Packet Switching except that the routing information is not stored in the switching nodes' routine tables but is always sent to the subscriber and recipient interfaces. It is then used in the header of each subsequent burst. The network destination address has several fields, each field providing the routing at a different network hierarchy level. When a burst, with its network destination address, arrives at an input port of a switching node, the input port may have to examine several of the fields in order to decide which field carries routing information destined for that switch.

This arrangement would seem to require significant intelligence or control means in each intervening node for selecting the route to be taken, i.e. by which exit to leave that node in the system. Moreover, storage means is needed at each input port to store an entire hierarchical set of address fields (at least) regardless of whether the whole set, or only one address field, has to be examined to determine the path through the switch.

Generally then, known systems are not entirely suitable for present day traffic requirements, with a predominance of voice signals, and the increasing demand for new services augurs for an intolerable overhead of connection processing. The problem will likely be exacerbated in the future due to the increase in video signals which also favour circuit switching.

An object of the present invention is to provide a novel switching system, and components therefor, which eliminate, or at least mitigate, the aforementioned problem.

## Summary of the Invention

According to the present invention a communications system comprises a plurality of switching nodes interconnected by transmission links. In operation, the system is arranged to transport between a first (or entry) node and a second (or egress) node a "transaction" signal comprising a message portion and a header portion. The message portion of the signal may be continuous and have a duration that is not determined by the system, but rather is at the discretion of the user. Each header portion comprises a set of node exit addresses corresponding to the sequence in which the transaction signal is to traverse the nodes in passing from the entry node to the egress node.

Each node exit address corresponds to an exit of one node through which the transaction signal should leave that node to reach the next node i.e. the node identified in the set of node exit addresses as next in the sequence. The set of node exit addresses thus predetermine the order in which the message portion will traverse the switch nodes in passing between the entry node and the egress node. Each node in the sequence of nodes to be traversed by the transaction signal includes means for detecting, in the header, a particular node exit address and initiating switching of the message portion, at least, to leave such node through that node exit so as to reach the next node in the sequence.

The sequence is determined, before the transaction signal leaves the entry node. The system may further comprise connection control means, at said entry node, for generating the set of node exit addresses, and an identifier, and inserting them into the transaction signal.

The system may comprise means for adding an identifier to the message portion of said signal before it leaves the entry node, and means for detecting such an identifier in an incoming transaction signal, (possibly minus its header), and relating such transaction signal to a transaction signal transmitted earlier.

Said connection controller means may include timing means and means for starting the timer when a transaction signal is sent to the node and stopping the timer when a corresponding acknowledgement transaction signal is received from the node. To this end, means for stopping the timer may serve also to detect in the "acnowledgement" transaction signal an identifier relating to the outgoing transaction signal.

The message portion may be digital or analogue, and may comprise voice, data, video, packet, or other form of user information. The message portion may follow the header without necessarily awaiting an acknowledgement that the transmission path, i.e. the connection, has been established. Generally, all signals will be transported as TDM signals, including packets which may be converted into TDM format at the access interface before launch into the entry node.

Advantageously, but not necessarily, the header portion is merely prefixed to the message portion without changing the format, rate, or duration of the message portion. Thus, a voice call generated at 64 Kb/second will travel through the system at that rate and without additional packetizing. On the other hand, a packetized signal may be handled by prefixing each packet with its own header portion to form a series of short transaction signals, which pass between nodes like any other transaction signals.

Since the transaction signal transmission rate may be the same as the source generation rate and the destination receiving rate, buffering is not needed at intermediate nodes in the system and speed or degree of parallelism within such node do not have to extend beyond the traffic bit rate.

Embodiments of the invention may make manifest advantageous attributes of both "source routing" and "fast circuit switching"; "source routing" inasmuch as the transaction signal has its routing header predetermined by the source, before being switched by the first node, and "circuit switching" since the switch acts as a circuit switch as it handles potential "infinite" duration connections without buffering. The switching is "fast" because the switch is "self-threading" i.e. the switching decision is based simply upon the information in the header. (In this context, the switching decision includes the election of the exit port as well as the actual switch closure).

The connection control apparatus associated with each entry node may be adapted to generate the set of node exit addresses in dependence upon destination information in an incoming connection establishment request. Preferably, the determining of the set of node exit addresses, using this destination information, is done by accessing a routine database, for example a look-up table. A suitable look-up table may comprise a plurality of such sets of node exit addresses, each set corresponding to one of the plurality of different routes to the egress nodes accessible by that entry node. There may, of course, be more than one set of node exit addresses for a given egress node to reflect alternative routes, to that egress node, from the entry node with which the look-up table is associated. Each set of node exit addresses may be associated with a destination interface address, which is unique in the network of destination interfaces each of which is associated with one of the egree nodes. The connection control apparatus may therefore be responsive to such a destination interface address in doing so. Access apparatus associated with each entry node may comprise means for generating the destination interface number by accessing a directory database using a directory number, or the like. Like the routing database, the directory database might be a look-up table. The look-up tables may be local to the entry node, or remote, and may be updated periodically from a central system controller.

It may help, in comprehending this invention, to consider a "node exit address" as the address of the next node and the link connecting the instant node to the next node. With one-to-one correspondence between exit, links, and next node, the node exit address effectively comprises the address of the exit of the instant node which will lead to the next node in the sequence. Of course, a node exit may lead to an instant node's own destination interface rather than a link to another node, in which the instant node would be deemed an "egress" node.

In preferred embodiments of the invention, the detection means in the switch node will respond to the first node exit address in the header and only the succeeding node exit addresses, designating subsequent nodes, if any, and the message portion, will leave the node. The first node exit address, having served its purpose of identifying the exit by which the transaction signal should leave the instant switch node, is "stripped off" or discarded. Since at each switch node the detecting means then scans only the first node exit address, and there is no storage or manipulation of the node exit addresses, the transaction signal may traverse the system quickly, effectively at propagation speed, thus offering spontaneous connectivity "on-demand".

Each node exit address may be part of a field which comprises a "start" flag, conveniently preceding the specific node exit address. Hence, the detection means associated with said first or intermediate switch node will be initiated by receipt of the "start" flag, to enable identification of the node exit from its address, following which the transaction signal will be switched to leave the node via that exit.

Each switch node may have row controller means for responding to the "start" flag to enable a plurality of crosspoints, all of which receive the succeeding node exit address, but only one of which can identify it as "its own" and route said transaction signal through its associated exit.

Preferably each said node switches the transaction signal without referring to the transaction signal itself, i.e. the header or any call processing information, to specify the time slot or channel on which it will emerge from the node.

Each node exit may comprise a plurality of exit ports. The switch node may then include means responsive to the address of such exit, in said header, for selecting one of said exit ports, all of which are connected to the same "next" node.

Each egress node may include means for responding to a recipient's channel number information, in the message signal, to route the message portion to its destination. Such "means for responding" may comprise a channel allocator to allocate the message portion to the required channel (whether temporal or physical) allocated to the recipient. Each egress node may include means for detecting an identifier in the transaction signal and stopping a corresponding timer in an associated access apparatus.

According to another aspect, the invention comprises access apparatus in or for a communications system of the first aspect, said access apparatus serving to generate, from an incoming signal, a signal including a header comprising a set of node exit addresses as previously described. The access apparatus may comprise input means for receiving a connection establishment request, and identifying a destination interface access therefrom, means for generating the header in dependence upon the destination interface address so identified, and output means for combining the header with a message portion and delivering the combined signal to an associated entry node.

According to another aspect, the access apparatus comprises input means for generating a destination interface address in response to an input signal containing a request for a connection to be set-up to a recipient associated with such destination interface.

In either of these aspects, the access apparatus may include means, such as a call controller, for determining a destination interface address corresponding to the egress node, conveniently by addressing a network directory database using the destination address, and said means for generating the header may respond to such destination interface address to provide said set of node exit addresses, conveniently by accessing a routing database which stores complete sets of node exit addresses indexed by the address of the destination interface to which they lead.

The databases may each comprise a look-up table, each of which may be updated to reflect network traffic and/or topology changes. The, or each, look-up table, may be local to the access apparatus, and updated by a central controller which has a network reference database, or be at a remote location and accessed by way of the nodes using transaction signals. It is an advantage that the table updating need not be done synchronously, i.e. it may be done independently of the updating of tables at other nodes in the system.

The access apparatus may be combined with egress apparatus which includes means for directing at least the user information of the message portion to the channel allocated to the recipient. The "means for directing" may be responsive to an identifier in the transaction signal to relate the signal to an earlier transaction signal transmitted by the associated access apparatus.

According to a third aspect, the invention comprises a switch, in or for a node of said communications system of the first aspect. The switch comprises at least one input and a plurality of exits, each exit being associated with a respective one of the system's transmission links. Detection means in the switch, conveniently in a crosspoint, serves to detect, in said header, one node exit address which corresponds to a particular one of the exits and, on detection thereof, to initiate routing of at least the message portion of the transaction signal to leave the switch by way of that exit. The arrangement is such that its own node exit address is not transmitted through the aforesaid exit. In essence, then, the switch is adapted to delete its own node exit address. The switch is adapted specifically for headers comprising a series of fields, each comprising a start flag followed by a node exit address. Then the switch responds to the start flag, routes the signal through the exit identified by the immediately-following node exit address, and deletes the first field. In practice, the switch merely omits to transmit the first field. It only acts upon it to determine the exit. Such deletion is facilitated by arrangement of the node exit addresses in the order in which the exits will be encountered as the signal traverses the nodes.

In the preferred embodiments, the switch also includes means for detecting the end of the transaction signal to break the connection through the switch when the transaction signal has passed.

The switch may comprise a row controller for directing the transaction signal to a plurality of detector means, each associated with a different one of said plurality of exits. Each detector means comprises means for scanning the header, detecting its own node exit address, and, following such detection, initiating switching of said transaction signal to emerge through its associated exit. Preferably all "start" flags of node exit addresses are identical so that, when a node exit address has been deleted, the transaction is led by an identical "start" flag.

Where the signal is time division multiplexed, the switch may further comprise arbitration means for selecting a channel at the exit. For more details of a suitable switch, the reader is directed to U.S. patent application serial No. 864,666 filed 19 May 1986, in the name of A. Graves et al, and which is incorporated herein by reference. The switch may also comprise hardware for responding to the third component, previously mentioned, of the node exit address field.

Other aspects of the invention comprise methods of operating a system, access apparatus or switch such as are covered by the earlier aspects.

Various other aspects of the invention should be considered independently. In particular, the invention further comprises a communication system comprising a plurality of switching nodes interconnected by transmission links, said system serving to transport between a first node and a second node transaction signals each comprising a message portion and a header portion. The header portion comprises a set of node exit addresses corresponding to the sequence in which at least said message portion is to traverse said switch nodes in passing between said first node and second node. At least the first node and each node intermediate the first node and the second node include route translation means responsive to conditions local to said switch node for responding to the node exit address, to select a specific port within such exit pertaining to the particular node, said detector means for detecting said node exit address, being responsive then to said specific port address.

Such route translation means may simply translate from a logical "next node" address to a physical address of a port.

Specific features of earlier aspects are also applicable to this aspect. For example the first or said intermediate node may be adapted to transmit to said exit only said message portion and such portion of the header portion as remains after removal of its own one of said node exit addresses.

Other aspects and features of the invention will become apparent from the following description and accompanying drawings.

Brief Description of the Drawings

Embodiments of the invention will now be described, by way of example only, with reference to the accompanying drawings, in which:

Figure 1 is a schematic diagram of a TDM (time division multiplex) digital communications system comprising a network of switching nodes at least one of which has associated with it access apparatus for forming a "transaction signal". The transaction signal comprises a message portion and a header portion. The latter predetermines, before the transaction signal is switched at the first node, the order in which the signal will traverse the switching nodes in travelling between its source and its destination;

Figure 2 is a signal diagram illustrating signals at various points in the system of Figure 1;

Figure 3 is a detailed diagram of access/egress apparatus, for deriving the header and prefixing the message with it;

Figure 4 is a diagram of a transaction signal and showing what will be referred to as "channel associated signalling";

Figure 5 is a schematic diagram of part of a switch, comprising a matrix with circuit switching elements at the crosspoints;

Figure 6 is a simplified block diagram of the parts of the switch which set up, and take down, a connection through it;

Figure 7 is a schematic diagram of crosspoint memory and connection memory parts of a crosspoint of the switch matrix;

Figure 8 is a schematic diagram of the crosspoint circuit itself;

Figure 9 is a functional block diagram of a row controller for controlling all of the crosspoint circuits in one row of the switch matrix;

Figure 10 is a schematic diagram of a "connect request" generator of the row controller;

Figure 11 is a state transition diagram illustrating the generation of the "connect request";

Figure 12 is a functional block diagram of a column controller for the switch matrix of Figure 5;

Figure 13 is a corresponding "disconnect" generator block diagram;

Figure 14 is a state transition diagram illustrating the generation of the "disconnect request"; and

Figure 15 is a signal diagram illustrating establishment and removal of an end-to-end connection.

Detailed Description of the Specific Embodiments

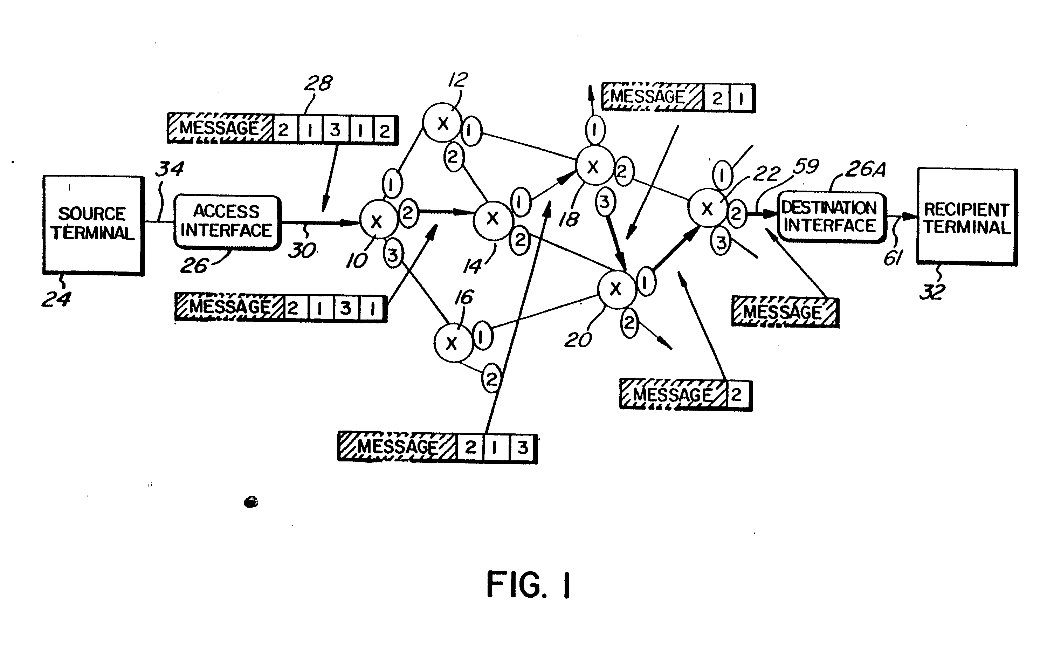

Referring now to Figure 1, a digital TDM (time division multiplex) communications system comprises a plurality of switching nodes 10, 12, 14, 16, 18, 20 and 22. Each node comprises a circuit switch with a plurality of exits whereby the node is connected by transmission links to other switch nodes. Associated with the first or entry node 10, is a source terminal 24 which is interfaced to the node 10 by access apparatus 26. The terminal 24 comprises, for example, a telephone, data terminal, or other network termination such as a PBX or LAN. The access interface 26 forms a "transaction signal" comprising user information preceded by a header which guides it through the system.

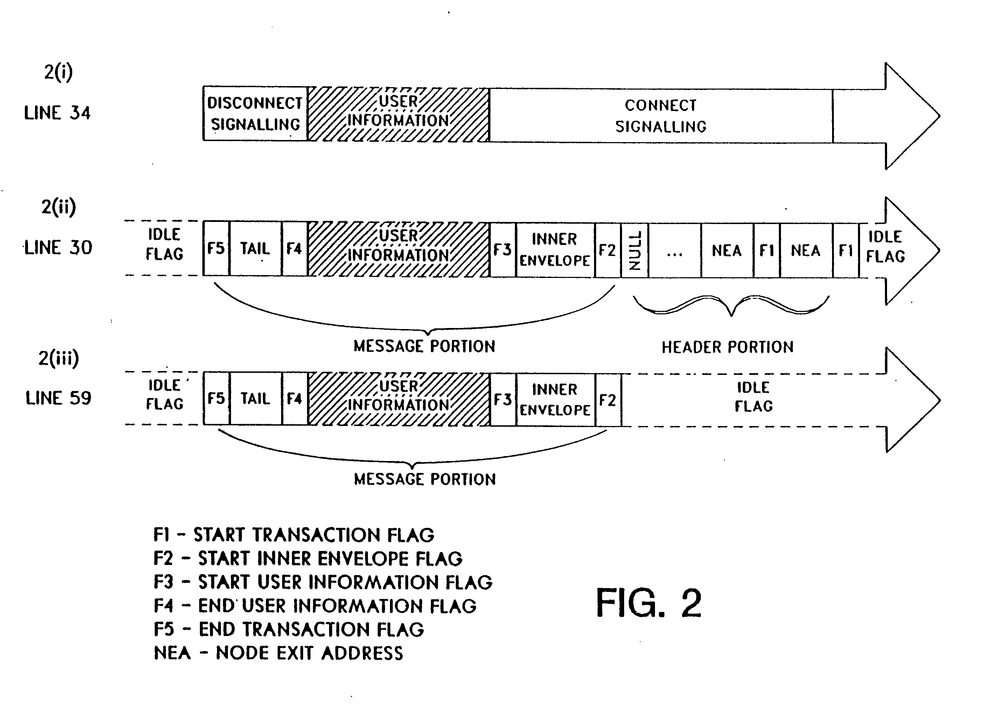

The term "user information" (see Figure 2) is intended to embrace data to be transmitted from source to recipient and which is of unrestricted duration comprising, for example, short data packets or entire voice conversations. The term "message portion" will be used to embrace user information plus end-to-end control information which will be described in more detail later. The term "header portion" is intended to embrace a sequential set of node exit addresses which are generated at and by the access interface 26 and incorporated into the transaction signal applied before the transaction signal is launched into the network, i.e. before switching by the entry node 10, and which predetermine the route the transaction signal will follow to reach the exit of the egress node 22, with which the recipient is associated.

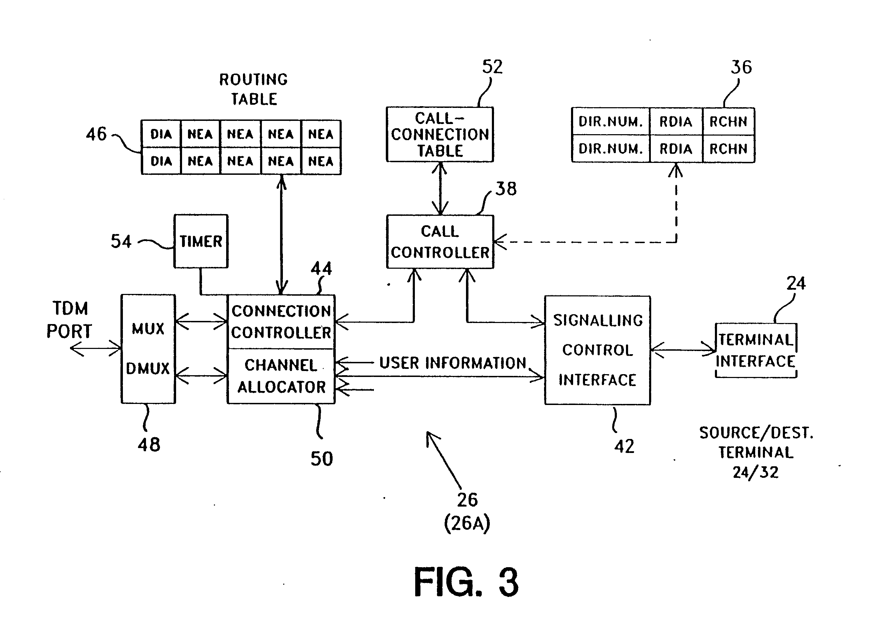

Usually an interface 26 will be bidirectional, as shown in Figure 3, to permit access and egress to and from the network. For the purposes of the description, however, it will be called an "access" interface when access is being discussed, and a "destination" interface when egress is being discussed.

As shown in Figure 1, a transaction signal 28 has a header comprising the node exit address sequence 21312 when it leaves the access interface 26 on line 30 bound for switch node 10 which is its "entry" node for access to the network of nodes.

When the transaction signal 28 arrives at switching node 10, the first node exit address in the header is number 2, so that transaction signal leaves switching node 10 by way of exit number 2. This node exit address 2, for switch node 10, automatically identifies switch node 14 as the next node to be traversed by the transaction signal. Switch node 10 merely identifies the exit (the first node exit address in the header sequence) and routes the transaction signal through it. The remainder of the node exit address sequence, and the end-to-end control information, are irrelevant to this switching operation. So far as switch node 10 is concerned, they may conveniently be viewed as the message portion of the transaction. Also, the channel and port within the exit are not determined by the signal itself.

When the transaction signal leaves switching node 10, the first node exit address, number 2, is missing. This is because actual switching occurs after the first node exit address has been scanned. In essence, then, the first switching node "strips off" its associated exit address. The remaining transaction signal, with the truncated header now comprising node exit address sequence 2131 (Figure 1), passes to the next switching node 14. The leading node exit address is now number 1, so the transaction signal leaves switching node 14 by way of its corresponding exit number 1, heading towards switch node 18. Again, the leading node exit address is stripped off leaving the sequence 213.

At the next switching node 18, the transaction signal exits by way of exit number 3, its header sequence now truncated to 21, and is directed towards switching node 20. There, the transaction signal exits by way of exit number 1. Again the corresponding leading node exit address is deleted leaving the header node exit address "sequence" as number 2. At the next switching node, 22, which is the destination or final node, the final exit number 2 is deleted leaving the original message portion to exit via exit number 2 to reach the corresponding destination interface 26A to which the recipient terminal 32 is connected. At this stage, there are no exit addresses left and the transaction signal comprises only the message portion. The destination channel number in the transaction signal message portion will enable the destination interface 26A to determine the recipient's physical address and route the message onto his channel, as will be described in more detail later.

Because each node need only scan the first node exit address in the header, the corresponding routing decision and switching operation within each switch node are made very quickly - more than one TDM time slot or channel time, but typically less than one TDM frame. Since the time to set up the physical connection through the node need only be one TDM frame, the total entry node to egress node connection set-up time is very quick, typically less than a millisecond compared to at least hundreds of milliseconds for circuit switches with stored or common control.

Once a connection through each of the network of nodes has been established in this "self-threading" way, the user information can traverse it immediately and for as long as necessary. When the transaction signal ends, each switching node detects an "end-transaction" flag and severs the connection through that node. Each switch node per-. forms a rapid disconnection function. Hence the connection is taken down at propagation speed which, as will be appreciated, is a distinct advantage. When the call terminates the access interface generates end-to-end disconnect control information which is transmitted at the "tail" of the transaction signal to initiate the removal of the end-to-end connection.

It should be understood, that the system will usually employ time division multiplexing (TDM). Each node exit typically will comprise several ports, all leading to the same next node (or destination interface). Also each port will actually have a plurality of TDM channels, for example twenty-four.

It should be noted that the connection set-up through the network of nodes is unidirectional. Bidirectional communication is achieved using two unidirectional connections which may or may not use the same route i.e. same sequence of nodes in reverse. Identifiers in the call control information sent in each transaction signal enable the access interfaces and destination interfaces to correlate the two unidirectional connections, and further relate each transaction signal which achieves connection to a particular call.

The generation of the set of node exit addresses to prefix the message portion will now be described in more detail with reference to Figures 2 and 3.

As shown in Figure 2(i), the signal on line 34 arriving at the access apparatus 26 comprises the user information preceded by "connect signalling" information for requesting a connection and followed by "disconnect signalling" information for requesting disconnection as will be described later.

The "connect" signalling information will generally include a physical destination address of the recipient, for example his dialled telephone number. Access apparatus 26 translates the "connect" signalling information into the set of node exit addresses in two steps. As illustrated in Figure 3, in access apparatus 38, the "connect" signalling information is passed via a signalling interface 42 to a call controller 38. The signalling interface 42 might comprise a Northern Telecom DMS line circuit customized to separate the signalling and direct it to the call controller 38 while passing the user information perhaps by way of a DS 30 channel, to the channel allocator 50. The call controller 38 first communicates with remote network directory database 36 to obtain the Destination Interface Address (DIA) of the destination interface 26A (Figure 1), to which recipient terminal 32 is connected. It should be noted at this stage, that every destination interface has a unique destination interface address, its DIA, in the network. This is in effect the exit of the egress node to which it is connected. Call controller 38 also generates processing information to be transmitted along with the user information.

In the second step, the destination interface address (DIA) is used by the connection controller 44 to generate a set of node exit addresses corresponding to the sequence of the switching nodes through which the transaction signal will be routed from access apparatus 26 to·the destination interface 26A. As illustrated in Figure 3, the call controller 38 passes the destination interface address to connection controller 44, which used it tó access a routing table 46. This routing table 46 conveniently comprises a memory containing a list of the addresses of destination interfaces available to entry node 10 in the system and, for each destination interface address, a set of node exit addresses. Each set of node exit addresses corresponds to a route that the transaction signal should traverse in travelling to the particular destination interface. There may, of course, be more than one route for a given egress node. It should be appreciated that each routing table 46 will be unique to the particular entry node 10 with which it is associated. The node exit address for each determines the exit by which the transaction signal must leave that particular node to reach the next node in the sequence. The contents of the routing table 46 can be updated periodically, perhaps from a central control (not shown), and not necessarily at the same time as the updating of tables at other nodes.

Although it is not shown in the drawings, each node exit address is preceded by a third component, following the node exit address, to serve for checking. In one embodiment, for example, this check component comprises the identification of the next node or, and especially, destination interface, which is connected to the particular exit. The exit itself has means for responding to the third component in checking that the transaction signal is being routed through the appropriate exit, for example by matching the destination interface or next node's identification carried in the transaction signal header, with the actual next node address stored at the exit. In the event of a mismatch the node will stop further propagation. Location of the "check" apparatus at the appropriate exit or column controller allows the transaction signal to be aborted before it reaches the link and hence it never reaches the next node. Since the transaction signal will not be acknowledged, information about the fault will be available at the entry node.

Referring again to Figures 2(i) and 2(ii), it should be noted that the "connect" signalling information translates into in-band transaction signalling including the header portion and "end-to-end" call control information. The "disconnect" signalling information translates into in-band "end-to-end" call control information destined for the far-end call controller and following the user information.

The connection controller 44 takes the header portion, comprising the sequence of node exit addresses, and by the call control information from call processor 38, and passes them to the multiplexer 48 on the same TDM channel that carries the user information (if any) from channel allocator 50. It also starts timer 54 for reasons which will become apparent later.

If the user information is insensitive to delay, the call controller 38 will allow it to flow onto the channel without ensuring that the header and inner envelope have been completed. Otherwise some buffering may take place to ensure that no user information is lost. The buffering can be determined as sufficient to accommodate the maximum header and maximum inner envelope, a "null" of suitable duration being left in the header portion to allow for a shorter route.

The connection controller 44 and channel allocator 50 can, of course, build and store several headers simultaneously for different TDM channels, though only one is depicted here for simplicity. From the multiplexer 48, the transaction signal is launched into the network and passes through, as previously described, to the egress node 22.

For convenience, the egress node may be like all others and merely identify the appropriate exit, the identification of the recipient's line or channel number being postponed until the remnants of the transaction signal reach the destination interface. On leaving that exit, the remnants of the transaction signal, now comprising user information, if any, and call control information, including the channel number, pass to the destination interface 26A associated with the egress node 22. As previously mentioned, in practice, each entry node will usually also be an egress or destination node in which case the destination interface 26A may be combined with that node's access apparatus 26. Such a combined bidirectional access/egress interface is shown in Figure 3. The source terminal 24 and recipient terminal 32 might then be combined.

Referring again to Figure 3, but now as a destination interface 26A, the transaction signal is demultiplexed by demultiplexer 48. The call control information is passed via the connection controller 44 to call controller 38 and the user information is passed to a channel allocator 50. The latter selects the correct channel and passes the user information, via signalling interface 42, to the recipient's destination terminal 32.

Although there may be exceptions, for example datagram messages, as a general rule, an acknowledgement will be sent by recipient's connection controller 44, to its counterpart, to confirm receipt of the transaction signal. The acknowledgement will stop the timer 54 set by the connection controller 44. The information as to whether or not to send an acknowledgement and, if so, where to send it and how to identify the transaction signal received, is contained in the call control information received with the incoming transaction signal.

Considering Figure 2(ii) again, but in more detail, a transaction signal comprises a message portion preceded by a header portion and followed by an IDLE flag. The header itself is preceded by an IDLE flag and comprises the set of node exit addresses, each preceded by a START flag, F1, which is the same for each node exit address.

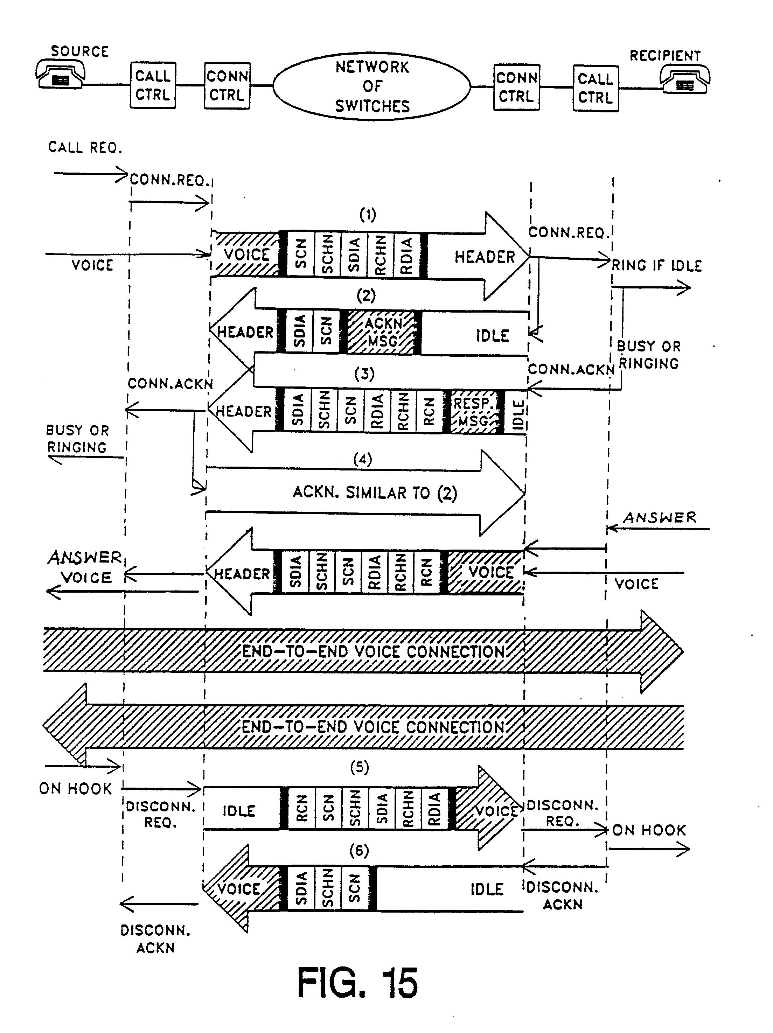

The message portion includes the user information preceded by an inner envelope (IE) which carries the "connect" call control information and including the recipient's channel number (RCHN) (see Figure 15). The message portion is followed by a "tail" carrying "disconnect" call control information. Within the inner envelope and the tail, the various fields are separated, and distinguished, by flags. Additional flags: F2, F3, F4 separate the header, inner envelope, user information and tail. A further flag, F5, marks the end of the transaction. It should be noted that flags F2 - F5 may be different. Flags F1 must be the same as each other since each becomes the "start transaction" flag when its predecessors have been omitted.

The call control information in the Inner Envelope and in the "tail" will include information to identify the transaction signal as part of a specific end-to-end connection. The call control information will be described in more detail later.

The header portion, inner envelope and tail, constitute in-band signalling. This implies that the same channel is used for the signalling as for the user information. The flags differentiate between different signalling components and the user information. Obviously, the flags should be unique and not occur elsewhere in the transaction signal. In order to maintain their uniqueness, Zero Code Suppression (bit-stuffing at the transmitter and bit-removal at the receiver) could be used, for example as in the HDLC format for packets. In this embodiment of the invention, however, it is preferred to use what here will be called "channel associated signalling" in order to facilitate high speed switching in the nodes.

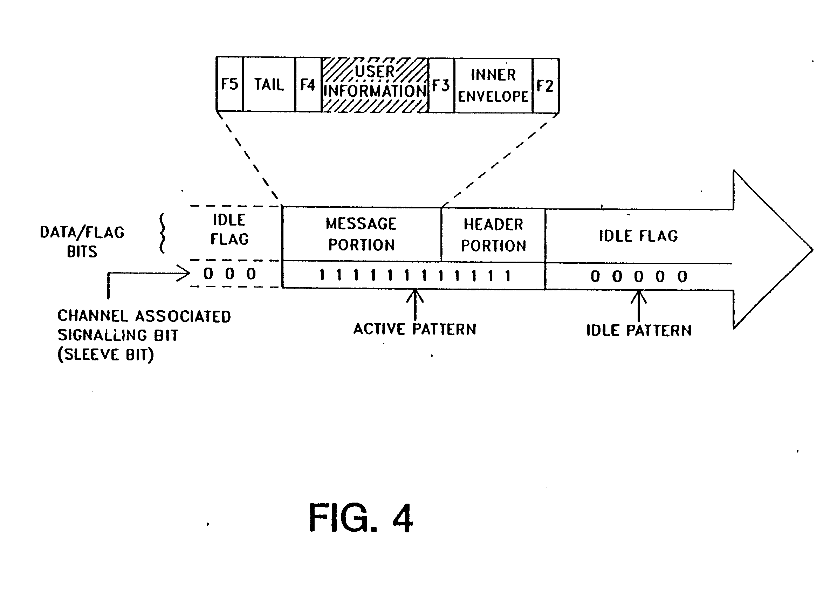

Thus, referring to Figure 4, the transaction signal is shown with a channel associated signalling bit (sleeve bit) associated with the main data channel. For convenience, this channel-associated signalling bit will be referred to hereafter as a "sleeve" bit. The sleeve bit is generated by connection controller 44 and associated with the main channel, carrying the header and message portion at the multiplexer 48. In this specific example, the main data comprises 8 bits, though it could be more, as could the channel associated signalling.

In Figure 4 it will be seen that the channel associated signalling takes either of two patterns, 1's or 0's. The 0-pattern represents IDLE and the 1-pattern represents ACTIVE. The transition from IDLE to ACTIVE is arranged to coincide with the start of the transaction signal, and the transition from ACTIVE to IDLE is arranged to coincide with the end of the transaction signal.

The sleeve bit serves to confirm that a "unique" F1 flag is indeed the "start" flag at the start of the transaction should the two occur together i.e. in association.

For a more robust system, the sleeve bit pattern may be extended to cover several bits. The subsequent description of the switch will cover, generally, an n-bit pattern which, with plural bits in the pattern, allows encoding of three states vis IDLE, ACTIVE, TRANSACTION DISCONNECT.

Since each switch node will switch the message portion transparently, there need be no detection of the flags located in the message portion in the switch. Other ways of assuring uniqueness of these "call control" flags, for example Zero Code Suppression, could be used without detracting from the speed of the switching function.

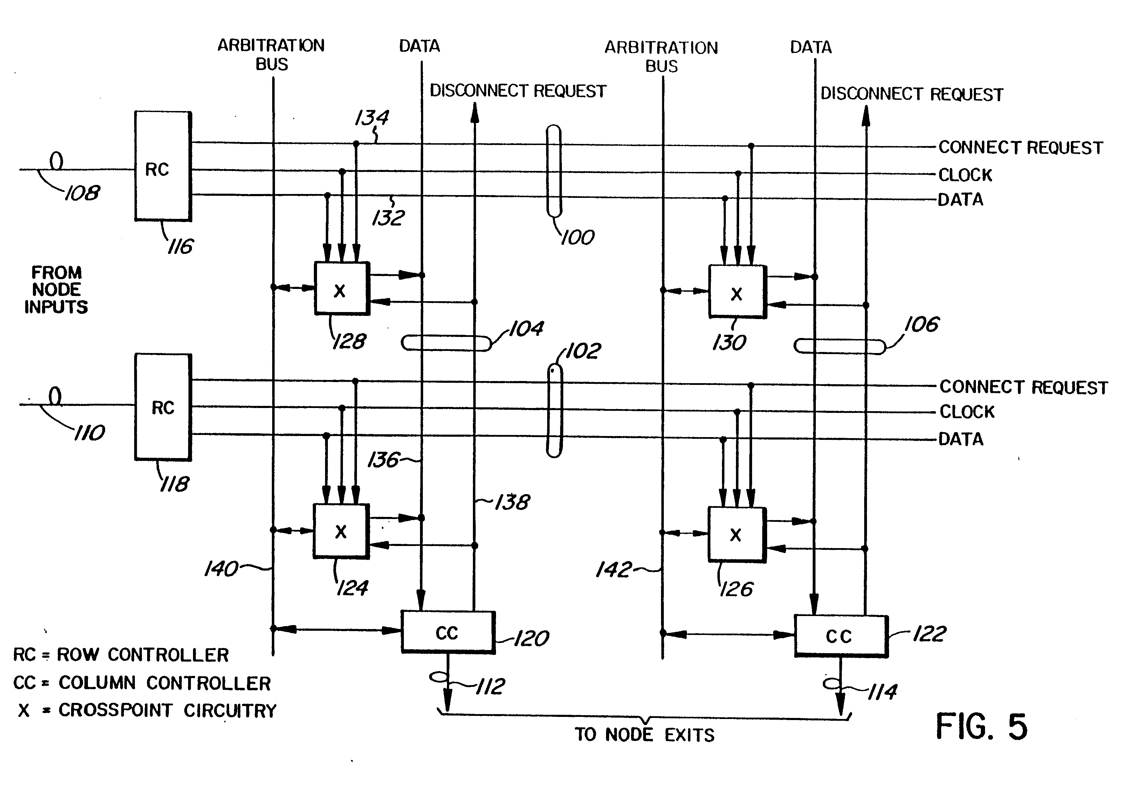

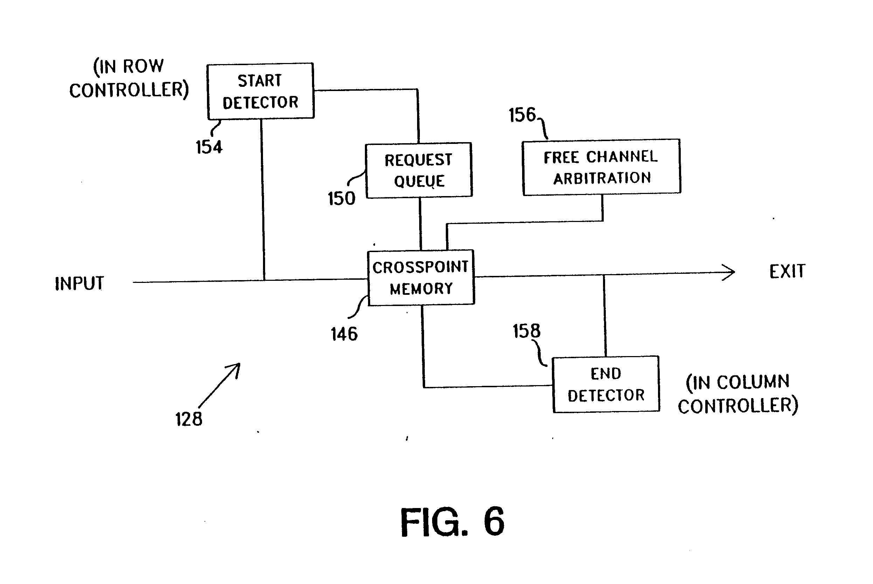

The passage of the transaction signal through an individual switching node will now be described with reference to Figures 5 to 13. Figure 5 shows a part of a switch matrix embodying the invention, and Figure 6 shows the functional elements of the switch which set up and remove/sever the connection through it.

The matrix part comprises two sets of 100 and 102 row buses and intersecting column buses 104 and 106. At the end of the sets of 100 and 102 of row buses are row controllers 116, 118 respectively. Each receives transaction signals from an input port via a corresponding one of two optical links 108, 110. Each input port will be connected to either a preceding node in the network, or to its own access interface 24. At the end of each column bus is a column controller 120, 122. Each passes the transaction signal to an associated exit port via one of a pair of corresponding optical links 112, 114.

The row bus 100 and column buses 104, 106 are interconnected by crosspoint circuits 128 and 130. Likewise, row bus 102 and column buses 104, 106 are interconnected by crosspoint circuits 124 and 126 respectively. The row controllers 116, 118 detect the start of a transaction signal and alert all crosspoints on the associated row that a connection is to be made. The column controllers 120 and 122 detect the end of the transaction signal and initiate severing of the connection. All the crosspoint circuits in each column are also interconnected by a respective one of a pair of arbitration buses 140, 142. Each row bus 100 comprises a CONNECT REQUEST line 134, a CLOCK line and a DATA line 132. Also, each column bus 104 comprises a DISCONNECT REQUEST line 138 and a DATA line 136.

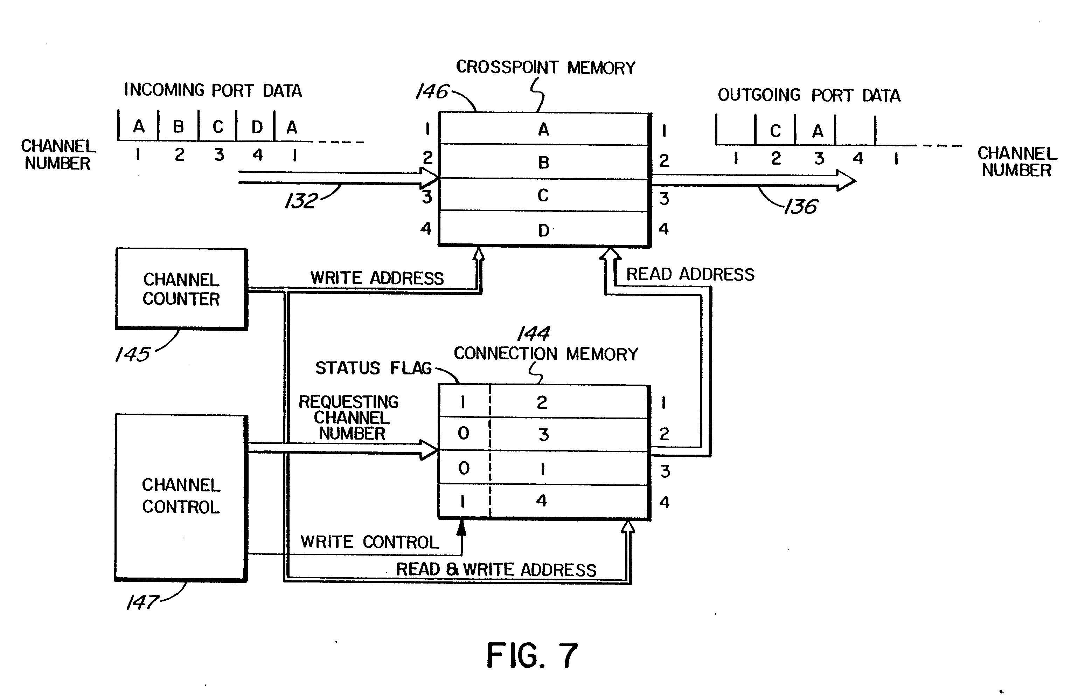

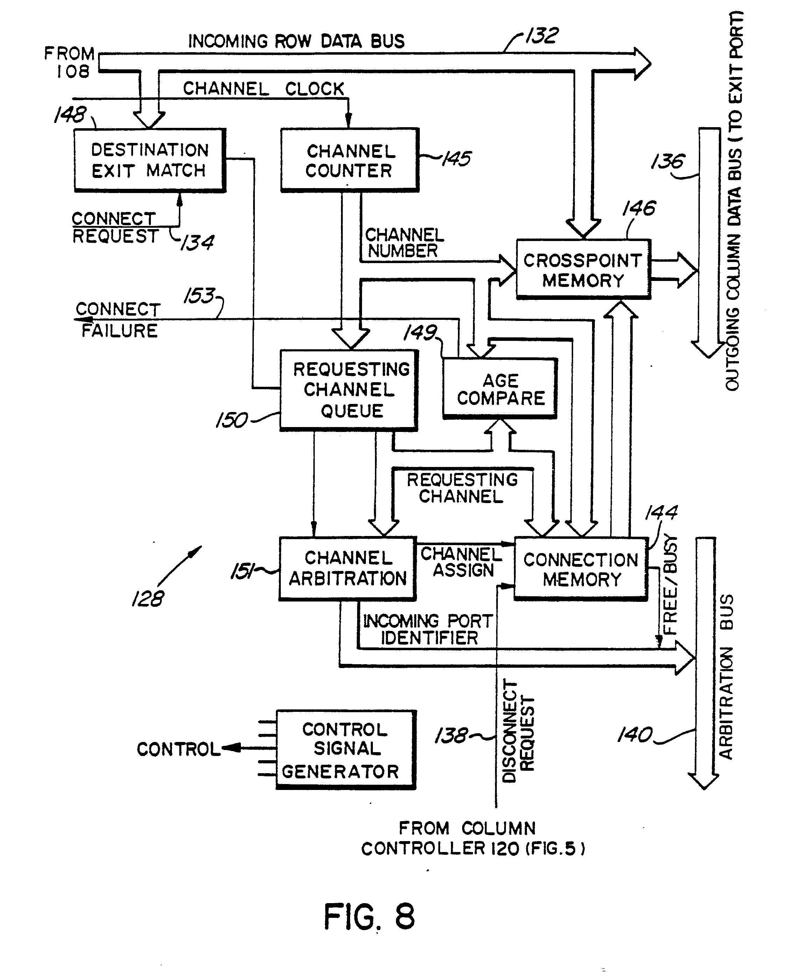

The crosspoint circuit 128, which is shown in greater detail in Figure 8, will be described using also the simplified functional diagrams of Figures 6 and 7.

The switch crosspoint is a kind of time slot interchanger comprising crosspoint memory 146 and connection memory 144. Crosspoint memory 146 is a dual-port RAM, into which data from incoming TDM port 108 is written sequentially: data (A) from incoming channel 1 goes into memory address 1; data (B) from incoming channel 2 goes into memory address 2 and so on. Channel counter 145 assures sequential write to the crosspoint memory 146. Data is read out from the crosspoint memory 146 into outgoing TDM exit 112 according to the read address obtained from the connection memory 144. In the example illustrated in Figure 7, data (C) from incoming channel 3 is read out into outgoing channel number 2, data (A) from incoming channel 1 is read out into outgoing channel number 3 and so on. No data is read out into channels 1 and 4 which means that the connection memory 144 did not set up connection from incoming bus 132 to these channels.

Connection memory 144 is a RAM which supplies read addresses for the crosspoint memory 146. The connection memory 144 contains an incoming channel number which is requesting connection to the associated exit 112. This requesting channel number and a status flag, are together written into the connection memory 144 by the channel control circuitry 147 with the write control signal enabling memory write cycle. The channel control circuitry 147 monitors the DATA line 136 of the outgoing exit 112, determines which channels are free, and assigns to them new connections. When the connection is granted to the incoming channel, the channel control 147 writes that channel number and zero status flag to the connection memory 144. The zero status flag is then maintained as long as connection is held and indicates that no other connection can be made on this channel. This status flag is set to "one" when the channel is disconnected. The data is read out from the connection memory 144 sequentially according to the state of the previously-mentioned channel counter 145 which controls also the write cycle to the crosspoint memory 146.

The progress of a transaction signal through the crosspoint will now be explained.

When the row controller 116 or 118 has detected the start transaction flag F1 it generates the connection request to inform all the crosspoint circuits (128, 130 or 124, 126) on its row that a connection should be made. This step can be considered as "enabling" them all. Each crosspoint receives the "connect request" on line 134 (Figure 8) which allows the relative position of the leading node exit address in the next TDM frame to be found. In the next TDM frame, all such crosspoint circuits (128, 130) scan the incoming port data bus 103 at that position in the frame for the node exit address which follows that "start" flag F1. Each crosspoint circuit compares this node exit address with its own identifier by means of a "destination" exit address matching device 148 (Figure 8). Only one crosspoint circuit will be able to match the node exit address with its own identifier. Such a match indicates that the remainder of the transaction signal is to be routed through the column bus and exit port associated with that particular crosspoint. Consequently, the incoming channel number from channel counter 145 is queued in connection request queue means 150 to await a free channel on that outgoing column DATA bus 136.

The channel counter 145 merely counts the time slots in each frame to determine the positions of the corresponding channels. The incoming and outgoing ports are in synchronism, so the same channel counter 145 is used for the outgoing channel number.

Associated with each channel on the outgoing column DATA bus 136 is a time slow on the time-multiplexed arbitration bus 140. Each time slot on the arbitration bus 140 carries a free/busy bit and several arbitration bits. The free/busy bit is used to indicate the state of a channel: busy (already in use) or idle (available for a new connection). Arbitration bits are used by the crosspoint for writing its channel request and reading the result of this attempt. The crosspoint circuits 128 in each column use the associated arbitration bus to find the next free channel in the exit concerned. When a particular crosspoint has a connection request in its queue 150, it seeks to gain access to the outgoing channel by trying to write its request on the arbitration bus 140. If it succeeds, it may then write into the connection memory 144, for that time slot, the incoming port channel number. For more details of a suitable arbitration scheme the reader is directed to U.S. patent application serial number 882,554, entitled Channel Allocation on a Time Division Multiplex Bus, by S.W. Trevitt (Canadian patent application serial number 512,940).

Briefly, in the arbitration scheme applied herein, a crosspoint circuit seeking a free channel applies its incoming port number to the parallel arbitration bus, using open collector type drivers (not shown). After a settling time, the crosspoint reads back the value on the arbitration bus. If this value is its own port number, and the free/busy arbitration bit indicates that the channel is available, that crosspoint may use the channel to make a connection. If the value read back is different, the crosspoint has lost an arbitration with another crosspoint and must repeat the connection attempt during the next time slot/channel time. It should be noted that using this arbitration scheme, the crosspoint with the highest incoming port identity number has the highest priority.

If the crosspoint does not secure a channel in one complete TDM frame period, it follows that all channels in that port are full and no connection is possible. Such an occurrence causes the crosspoint circuit to delete this particular connection request from its requesting channel queue 150 and to indicate to the associated row controller that it has done so (connection failure).

The requesting channel queue 150 is responsible for holding the channel numbers of outstanding connection requests, until a free channel at the appropriate exit is found. It may be composed of a single port RAM, which is accessed twice in one channel time, to allow channel numbers to be queued and extracted from the queue without blocking.

The requesting channel queue 150 includes the queue RAM and two synchronous counters, one for the queue head address, and one for the queue tail address. These are multiplexed together, so that the head address is enabled for a "write", and the tail address for a "read". At the completion of a valid "read" cycle, the tail address is incremented, and similarly, the head address is incremented at the completion of a "write". The "write" is controlled by the connect request signal via exit port matching device 148, and the data into the RAM of queue 150 comes from the channel counter 145. The "read" is controlled by the arbitration circuitry 151. Two flags are generated, a "queue full" flag, and a "queue empty" flag. If the queue is full, no additional writes may be performed, and if the queue is empty, no "reads" are allowed. One of these two flags is set when the tail and head addresses are equal. The flag that is set depends on the last cycle that was performed. If it was a "read", then the "empty" flag is set, and a "write" will set the "full" flag. The channel arbitration circuitry 151 is controlled by the "queue empty" flag from the RAM of queue 150. If there is anything in the queue, then arbitration will be performed. This block will continue to arbitrate for channels until the queue is again empty. When an arbitration cycle is won, the data from the RAM of queue 150, (ie. the channel number of the input or incoming port) is written into the connection memory 144. At the end of this cycle, the tail address for the queue is incremented. If the queue is still not empty, then the arbitration process continues.

The age comparator circuitry 149 (Figure 8) generates a "connect failure" indication on line 153 when the connection waits longer than a predetermined period of time (e.g. one TDM frame) in the requesting channel queue 150.

Three of the blocks described above in relation to Figure 8, vis. requesting channel queue 150, channel arbitration circuitry 151, and age comparator 149 are equivalent to the channel control block 147 shown in Figure 7.

The connection memory 144 and crosspoint memory 146 operate similarly to those shown in Figure 7.

The connection memory 144 is single-port RAM, with the address for both "write" and "read" cycles coming from the channel counter 145. The "write" cycle is enabled by the arbitration circuitry 151, and the "read" cycle is continuously enabled.

As mentioned previously, the connection memory 144 contains the incoming channel number, and a status flag. The status flag, which becomes the free/busy bit of the arbitration bus 140, is written to a zero when a connection is made, and written to a one when a disconnect is performed. Connection memory 144 also writes the free/busy bit into the arbitration bus 140.

The output of the connection memory 144 is used to generate the "read" address to the crosspoint memory 146. The channel number is used as the address for a "write" cycle of the crosspoint memory 146, which is the first cycle of a channel, and the data from the connection memory 144 is used for the "read" cycle. The data into crosspoint memory 146 comes from the incoming port on the incoming DATA bus 132. The data from crosspoint memory 146 is enabled to the outgoing DATA line 136 of column bus 104 if the free/busy arbitration bit is zero.

The control signal generator 158 generates all the control signals for the rest of the crosspoint circuit 128. Every signal is synchronized to the channel clock, and the frame pulse. As mentioned previously, this allows two full sets of memory control signals to take place in one channel time. One set is used to perform a memory read, and one set to perform a memory write. In the case of the request channel queue 150 and connection memory 144, the first cycle is a "read", and the second is a "write". The crosspoint data memory 146 is operated in reverse, with the "write" coming first.

To summarize, using the simplified crosspoint diagram shown in Figure 6, the row controller detects the "start transaction" flag and prepares its crosspoints to scan the next node exit address. All do so, but only one finds that the first node exit address matches the exit number of that crosspoint's column/exit. It puts the "connect request" into queue. Free channel arbitrator 156 contends for a channel at that exit, and, if such contention is successful, the transaction signal is routed through it. The connection will persist so long as the transaction signal persists. End detector 158, located in the associated column controller 120 or 122, monitors the transaction signal and, when it detects its end, namely the transition from ACTIVE to IDLE with an accompanying change in the sleeve bit, it initiates disconnection and freeing of the assigned channel.

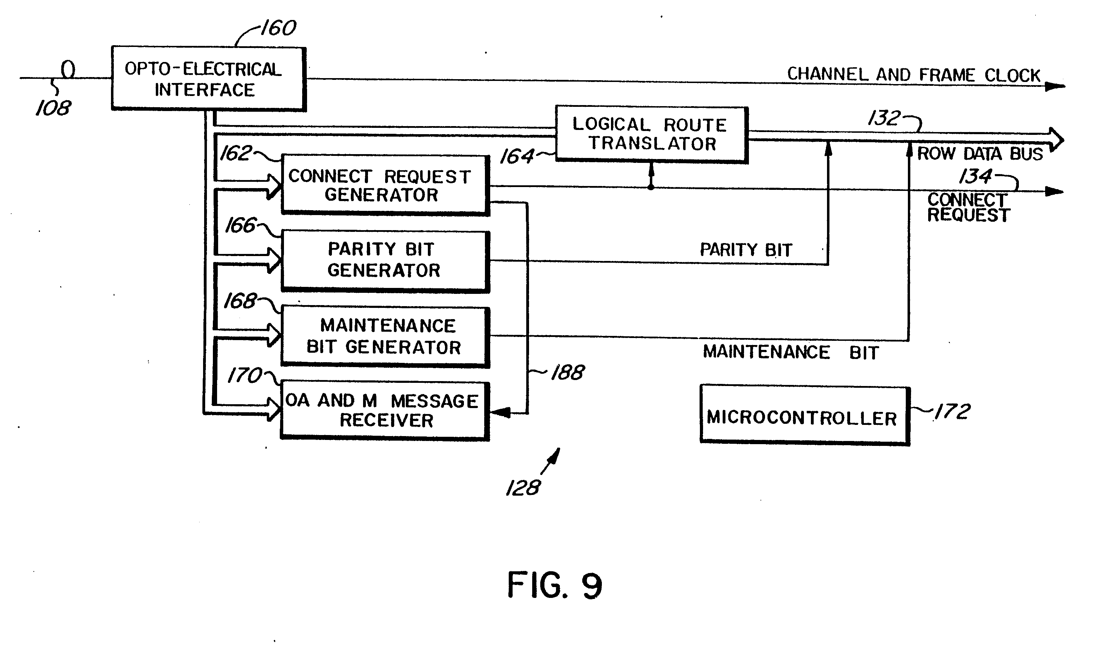

The row controller 116 or 118 is shown in greater detail in Figure 9. The opto-electrical interface 160 receives transaction signals from the fiber link 108 and provides optical to electrical conversion and clock recovery. Connection request generator 162 recognizes the beginning of a transaction signal when it detects a "START TRANSACTION FLAG" F1 on a channel that has been idle and generates a "connect request" signal which is sent on "CONNECT REQUEST" line 134 to all crosspoints (128, 130 . . .) in this row.

The logical route translator 164 activated by the connect request generator 162 allows for the translation of the node exit address in the transaction signal, to a specific outgoing port (physical) number. This function may be omitted if the node exit address is already a physical port number. The logical route translator 164 can comprise a look-up table which is initialized and updated by the microcontroller 172 perhaps on instruction to do so by a local operation, administration and maintenance (OA&M) switch processor (not shown).

The party bit generator 166 monitors all the transaction signal bits sent to the crosspoints on the row and adds to them an odd parity bit. Parity bits are then used in the column controller 120/122 (see Figure 5) for the detection of errors which might occur during the switching process in the crosspoints.

The maintenance bit generator 168 is independent of the transaction signal content. It generates a serial bit stream for each channel carrying a transaction signal that contains an encoded incoming port and the number of the channel on which the transaction signal arrived at the input of the switch. The maintenance signal allows column controller 120/122 (see Figure 5) to localize the source port and channel of the transaction signal and, together with the parity bit could be used for maintenance purposes.

The function of the operation, administration and maintenance (OA&M) message receiver 170 is to capture incoming OA&M messages which are recognized by the connect request generator 162 and to store them in its buffer for further processing in the local OA&M switch processor (not shown).

The microcontroller 172 is a part of the OA&M facility of the switch. It is responsible for gathering statistical information from the switch that will be used for monitoring switch behaviour. This involves polling state memories to generate traffic level information, monitoring electro-optical interfaces and forwarding OA&M messages that have been received by receiver 170. It also responds to commands that are sent from the local OA&M switch processor and modifies the row controller operation, for example by updating the logical route translator.

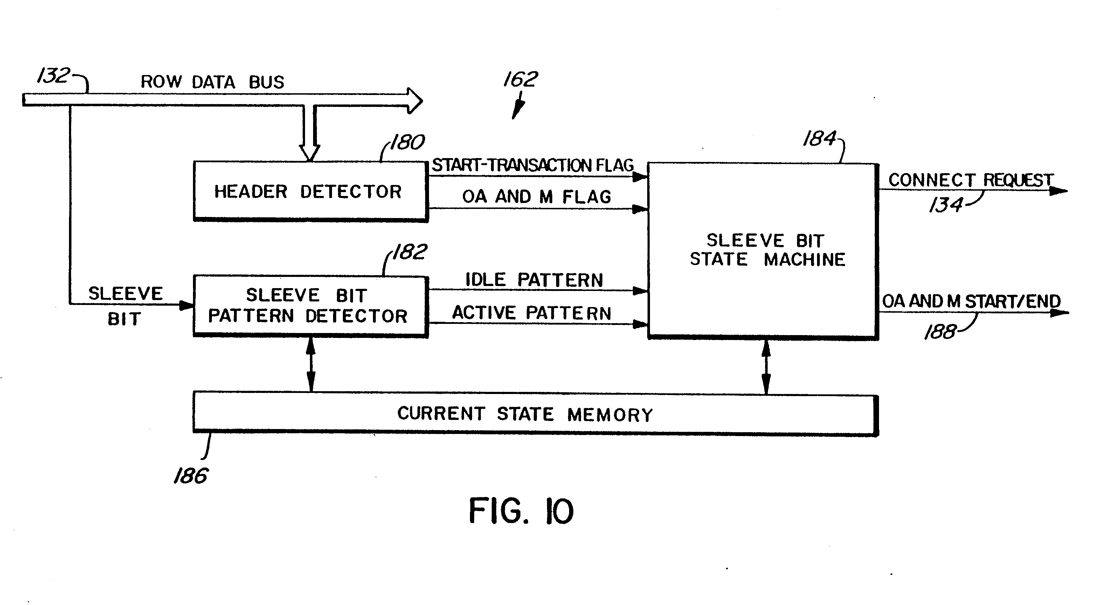

The functional diagram of the connect request detector 162, which is the main functional block of row controller 116/118, is shown in greater detail in Figure 10.

Connection request generator 162 first recognizes the beginning of a transaction signal by recognizing the start transaction flag F1 on row data bus 132. At least two types of transaction signals are differentiated at this point by using two different "start" flags: the transaction signal switched in the given switching node and an OA&M transaction signal destined for the local OA&M processor of this switching mode. An OA&M transaction is not switched but is detected at the row controller 116/118 and forwarded to the OA&M message receiver 170 on Figure 8.

At the same time the sleeve bit pattern detector 182 constantly monitors the current sleeve bit pattern on line 132. If the "start" flag detected by the header detector 180 occurred when the channel has been IDLE, and this start flag is not an OA&M transaction start flag, then the sleeve bit state machine 184 generates a "connect request" on line 134.

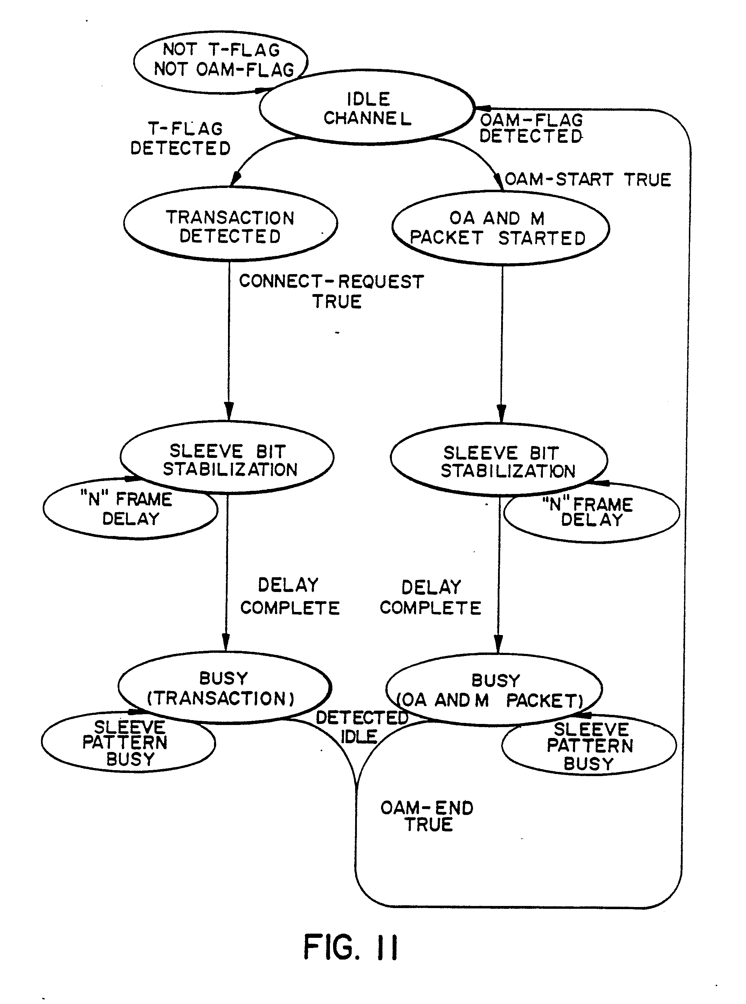

When a start flag for OA&M transaction is detected, the sleeve bit state machine 184 does not generate a "connect request" signal, but instead, generates an OA&M start signal on line 188 for the OA&M message receiver 170. It also indicates to the OA&M message receiver 170 the end of an OA&M message. The current state memory 186 stores the sleeve bit pattern "history" for each channel. If for example, the sleeve bit pattern is N-bits long, the current state memory 186 holds the last N-1 sleeve bits (that is collected from the last N-1 frames) is updated each frame by adding a new sleeve bit and dropping the oldest one. This arrangement allows for the immediate identification and update of the current sleeve bit pattern. The "connect request" generation state transition diagram is shown in Figure 11, and explains in greater detail the generation of a "connect request" signal. In Figure 10, the T-FLAG designates "start" transaction flag and the OAM-FLAG designates "start" OA&M transaction flag. The "N" frame delay corresponds to the N-bit long sleeve bit pattern, each bit occurring with association with a data word. In the worst case "n" frame are necessary to detect the change of n-bit long sleeve bit pattern.

The column controller 120 or 122 is shown in greater detail in Figure 11.

The disconnect generator 190 generates a "disconnect request" signal for all crosspoints in the column. The "disconnect request" signal indicates either normal termination of the transaction signal when the end of transaction flag is detected or abnormal transaction termination when any of the following conditions occur:

-routing header error

-mismatch between sleeve bit pattern and arbitration signal e.g. (a) sleeve bit indicates transaction in progress (ACTIVE) but arbitration signal is in the FREE state; (b) sleeve bit indicates IDLE but arbitration signal is in the BUSY state.

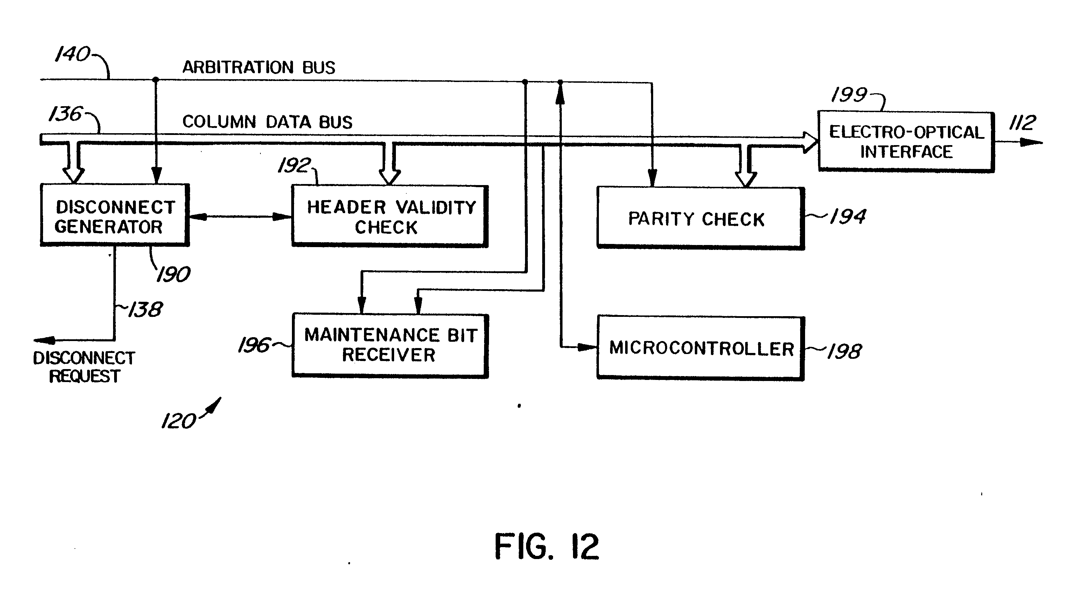

The column controller 120 or 122 may also provide post-switching validation of the route in the header validity check circuitry 192. The third component of the transaction signal routing address field is added by the access apparatus, to designate the next switching node. This third component is compared with a "next node" identifier stored in the header validity check circuitry 192. If the two do not match, the transaction signal is disconnected and the information that a misrouting has occurred is sent to the micro-controller 198 (Figure 12), for diagnosis purposes. The abortion takes place after switching but before the misrouted transaction signal can read the link leading to the next node.

The column controller also provides a post-switching check of parity of the transaction signal data in the parity check block 194. Parity error information can be used for switch maintenance purposes.

The maintenance bit receiver 196 generates a connectivity table, by column channel number, of row port and channel number that the column channel is connected to. This table exists in each column controller, so that the OA&M processor associated with each switch can generate a connect map for the entire switch. This map can be used for the traffic reconfiguration, fault diagnosis and maintenance purposes.

The microcontroller 198 of the column controller 120 is similar to the microcontroller '72 of the row controller 128, with the additional function of removing the column from service by setting the arbitration bit to the BUSY state so that no further transactions can be connected on it. This function can be used for maintenance purposes and as a local traffic control mechanism.

Electro-optical interface 199 provides signal conversion of the electrical parallel data bus 136 to serial optical signal on the outgoing fiber link 112. It also removes the parity bit and maintenance bit before transmission.

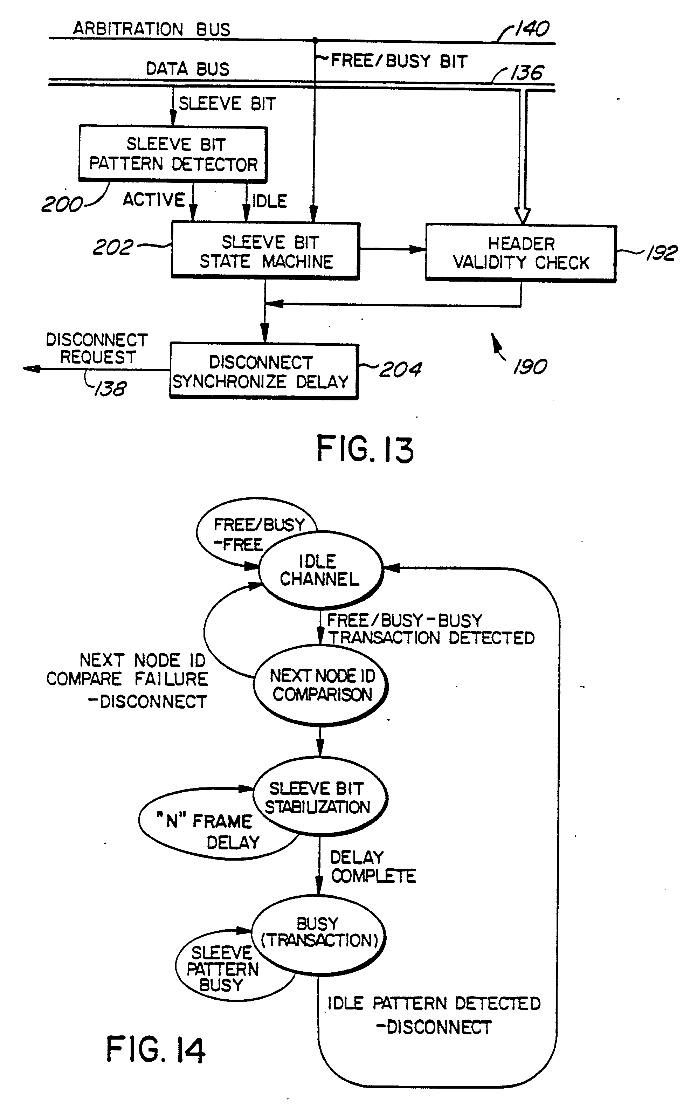

The disconnect generator 190 which is the main functional block of the column controller 120 is shown in greater detail in Figure 13. The sleeve bit pattern detector recognizes the change of the sleeve bit pattern from IDLE (e.g. sleeve bit = 0) to ACTIVE (e.g. sleeve bit = 1) and sends the signals: IDLE DETECTED or ACTIVE DETECTED to the sleeve bit state machine 202.

Sleeve bit state machine 202 generates the "disconnect request" signal when an IDLE sleeve bit pattern is detected on a channel that is currently marked BUSY on the arbitration bus. The output of the sleeve bit state machine has to be synchronized with the channel to be disconnected, so a synchronize delay equal one TDM frame minus one channel time is required.

The "disconnect request" signal may also be generated from the header validity check block 192 if a routing header error is detected as previously mentioned.

The "disconnect request" generation state transition diagram is shown in Figure 14.

For details of another switch embodying the present invention, the reader is directed to U.S. patent application serial number 864,666, filed 19 May 1986 in the name of Alan F. Graves, Kent G. Bodell and Jeffrey J. Brown (Canadian Patent Application 509,166, filed 14 May 1986) and assigned to the same assignee as the present invention, and which is incorporated herein by reference.

An important feature of embodiments of the present invention, is that the switch nodes respond to the first node exit address, and make the connection between node input and node exit so quickly, that the following node exit address is conveyed with the · succeeding message portion through that selected exit without being delayed for more than one TDM frame and usually during few channel times. Switching takes place, therefore, much more quickly than if, for example, the entire destination address had to be scanned at every node along the route. Because no significant delays are incurred at the switching nodes, the transaction signal passes through the network at, substantially, propagation speed, which allows separate call set-up/reply routines to be dispensed with.

A simplified description of a basic call will now be used to illustrate, with reference to Figure 15, how the system operates. It will be understood, however, that the call controller will be able to set up more complicated calls, such as conference calls, using transaction signals within the network of nodes.

Understanding of the system might be facilitated if it is viewed as annular. The inner is the switching network of nodes and the annulus is the access/egress apparatus. The edge of the network may be taken as the point at which the connection controller launches the transaction signal into the network. The end of the connection is the point at which the call controller identifies and communicates information to or from the recipient - whether a subscriber or an internal signalling/message centre.

When source terminal 24 (Figure 3) goes "off-hook", and "dials" the destination number (physical address) of a recipient, the associated signalling interface 42 indicate the event to the call control 38 which generates a "connect request" in a manner that need not be described here. The call controller 38 uses the destination number to access a network directory database 36 (Figure 3) to obtain the unique address of the destination/egress interface (26A) with which the recipient is associated, together with the port (if applicable) and channel number, at that destination interface, which connect to the recipient.

The call controller 38 creates a new entry, identified a source call number (SCN), in its call/connection table 52 (Figure 5) and enters the recipient's destination interface address (RDIA) and the recipient's channel number (RCHN). It also enters the channel number of source terminal 24 (SCHN) which is originating the call, and its own "source" destination interface address (SDIA) which will be used by the recipient's access interface.

The call controller 38 passes the contents of the call/connection table entry to the connection controller 44 and prepares to transmit user information after an interval that is sufficient to allow the longest set of node exit addresses to be generated, added to the inner envelope, and sent to the multiplexer 48.

The connection controller 44 uses the recipient's destination interface address (RDIA) to access the routing database 46 and obtain the set of node exit addresses. It forms these into a header and passes them to the multiplexer 48. The connection controller 44 also inserts the contents of entry SCN of the call/connection table 52 as an inner envelope following the header (and before the user information, if any, at this stage). The user information is shown as "VOICE" since the source channel is "open". This transaction signal is identified as [1] in Figure 15. Apart from the convenience of sending the whole table entry, the recipient destination interface address (RDIA) is sent in the inner envelope so that it can serve, at the recipient's destination interface itself, to confirm that the transaction signal arrived at the correct interface.

At the moment it transmits the header and inner envelope through the multiplexer 48, the connection controller 44 starts a timer 54, which is dedicated to this particular transaction signal, and enters the source call number SCN in an associated register (not shown). This timer 54 is set for an interval that is long enough for a transaction signal to reach the destination interface furthest from the entry node, and return. If no acknowledgement is received during that time, plus, perhaps, one millisecond, the connection controller 44 will assume that the header and inner envelope did not arrive at the recipient's destination interface. It will try again, once or twice, (not necessarily by the same route each time) before signalling that the connection attempt failed.

Assuming that the transaction signal establishes its route across the network as previously described and arrives at the egress node's destination interface, the transaction signal will pass through the multiplexer/demultiplexer 48. All node exit address originally in the header should have been deleted in transit. The recipient connection controller 44 detects, first, the source destination interface address (SDIA) and uses it to access its own routing database 46 and generate a set of node exit addresses with which to send "received" acknowledgement transaction signal ([2] in Figure 15) to the source connection controller 44 to stop its timer 54. The set of node exit addresses will also comprise the route for any subsequent "voice" transaction signal.

The actual acknowledgement message comprises the source call number (SCN) which will enable the source connection controller 44 to identify from its timer register which transaction signal was received, and hence, which timer 54 to stop. It may be that there will be more than one connection for a given call, in which case a specific connection number could be used instead of the source call number SCN to identify the transaction signal and its acknowledgement. The acknowledgement will usually also return the source destination address (SDIA) to serve, at the source destination interface, as a check that the routing took place correctly. Since the connection to the recipient's channel has not yet been established, the inner envelope of transaction signal [2] is shown followed by IDLE.

It should be noted that, since the source connection controller 44 sent its own destination interface address (SDIA), the recipient connection controller 44 could use it immediately to obtain a route. It did not have to wait for the call controller 38 to access a network directory database 36 to obtain the source destination interface address.

Having acknowledged that edge-to-edge connection was made, i.e. the transaction signal arrived, the connection controller 44 passes the contents of the inner envelope, to its associated call controller 38. The recipient call controller 38 enters this information into its own call/connection table 52, with its own entry or call number (RCN). The recipient call controller 38 will then set up a connection to the recipient's terminal 32. If the user information from source terminal 24 is data, it may have been transmitted immediately behind the inner envelope and so will be transmitted directly to the recipient's terminal 32.

In the case of a voice call, where the source will be waiting for end-to-end connection to be confirmed, the recipient call controller 38 will apply ringing tone to the recipient's channel and generate a transaction signal [3] to be sent to the source as an end-to-end connection acknowledgement. This transaction signal [3] will advise the source call controller 38 to apply ringing time also to the source channel. At the same time, the recipient call controller 38 will send in the inner envelope the call/connection entry, adding to it the recipient call number (RCN) under which it recorded the incoming inner envelope information in its own call/connection table 52.

When the "ringing" transaction signal [3] is received at the source access interface, the call controller identifies it by the source call number (SCN) and the recipient call number (RCN) from the recipient's call/connection table is entered in the source call/connection table 52 to complete the original-entry. The "ringing" signal is generated, as mentioned, and directed to terminal 24. A further transaction signal [4] will be sent to acknowledge receipt of the "ringing" transaction signal [2].

At this point, both the source call/connection table and the recipient call/connection table have corresponding entries carrying all the information needed to identify and relate go-and-return transaction signals with each other at the edge of the switching network and to relate each transaction signal with a particular call at the call controller 38. Accordingly each transaction signal can be labelled "my reference, your reference" by putting the appropriate information from the call-connection table into the inner envelope.

The transaction signals need not follow the same route in opposite directions. Indeed, successive transaction signals in the same direction need not follow the same route.

Arrival of each transaction signal will be acknowledged, however, to ensure that the corresponding connection controller does not "time-out".

It would be possible for each call controller 38 to access its call-connection table 52 to obtain the channel number to which the user information of an incoming transaction signal should be directed. It is more efficacious, however, to include the source or recipient's channel number in the inner envelope so that the user information can be sent there directly.

Once end-to-end connection has been established in this way, user information can be exchanged, without any set limit to call duration being set by the system itself. When the recipient answers, a new transaction signal will be launched, this time followed immediately by "VOICE". The header will be acknowledged on arrival at the entry or source node. Thereafter the voice signals, on two independent routes, may continue as indicated in Figure 15.

When one party decides to end the call and goes "on-hook", the associated call controller 38 detects this and supplies a "disconnect request" signal to the connection controller 44. The connection controller 44, adds the call-connection table data as a TAIL to the transaction signal.

When it reaches the egress node, receipt of the TAIL may be acknowledged by a separate transaction, just like a header, and the TAIL information will be used by the call controller to clear the recipient's channel and erase the entry in the recipient call-connection table. Before erasing the entry, it will generate a "disconnect" acknowledgement which will return to the source call controller 38, to initiate erasure of the call/connection table entry therein.

It should be appreciated that correlation of a transaction signal is twofold. First, at the edge of the node network, it is correlated with a previously-transmitted transaction signal so that the "time-out" timer, set when that earlier transaction signal was launched, can be stopped. This will usually be done by the connection controller. The transaction signal is then correlated with the particular end-to-end connection so that the user information can be directed to the correct line or channel for the recipient. This will usually be done by the call controller.

It should be noted, however, that, DATAGRAM type calls excepted, only the arrival of the header and identifier at the "edge", i.e. the receiving connection controller need be acknowledged, whether the end-to-end connection is bidirectional or not.

Once the network directory database has been used to give the Destination Interface Address, the end-to-end transport of signals takes place at substantially propagation speed. Thus, unlike a conventional circuit switched end-to-end connection set-up, the novel transaction signal approach is so fast that the user information may follow its connection request without awaiting any confirmation that a connection has been established.

This speed is attributable not only to the fast circuit switching, but also to the combination of source routing i.e. before the edge of the network, and self-routing, i.e. the route carried by the signal itself, with "edge-to-edge" virtual connections within the network.

The contents of the call-connection table involved in the end-to-end connection can be surmised from the foregoing description of this simplified end-to-end basic connection is summarized in Figure 15.

When the connection has been established, both tables will hold the contents of the inner envelope, plus other call processing information.

Various modifications and alternatives are possible without exceeding the scope of the present invention.

For example, a single CALL/CONNECTION table has been shown, with access to it by the call controller using a call number (SCN or RCN) to identify the entry.

To identify a particular transaction signal, the connection controller copies the call number, supplied by the call controller for the inner envelope, into its own timer register.

This is satisfactory when there is a one-to-one correspondence between calls and connections. In some cases, however, there will not be such a correspondence, for example, a multi-party call will require several connections. Then it might be preferable to use a separate connection table, accessible by the connection controller, and a separate call table accessible by the call controller. Necessary cross-referencing of calls and connections might be done by inserting a call/connection concordance identifier in both tables. With this arrangement, the acknowledgement of the arrival of a transaction signal might be done by the connection controller accessing directly the connection table.

It will be appreciated that, where separate connection tables are used, a "connection identifier" could be inserted into the transaction signal by the connection controller for use by its counterpart to identify the "acknowledgement of arrival" transaction signal. The first connection controller, when receiving its own connection identifier, will identify and stop the appropriate timer.

The way the basic call has been described, there is an exchange of information enabling the connection controller at each end to build its call/connection table entry until there is concordance between both ends. As described, the information transmitted in the inner envelope of each transaction signal (except an acknowledgement of arrival) comprises substantially the whole contents of the call/connection table entry, each call controller selecting what it needs to complete its own table and identifying specific items as necessitating action, for example ringing tone generation. This apparent superfluity of information transfer is of little consequence when one considers that the inner envelope will also carry other information about the call, but which has not been described here.

Although the operation of the system was described for an end-to-end call, it should be appreciated that this system will permit messages generated by the call controllers to pass through the same network of nodes that subscriber signals use.

For simplicity of the description, it has been assumed that the header will carry the address of a node exit, without reference to a particular port. In practice, however, the header may actually carry a specific exit port number as each

In the specific description, the presence of the logical route translator 164 indicates that the node exit address is a logical address rather than a physical address, the logical route translator serving to translate from a logical node exit address to a physical specific port address.

Although the channel-associated signalling has been shown as an extra bit, alternatives are possible. For example, it could be incorporated within a 64 kBit/second bit stream, only, say, 56 kBits/second carrying the "in-band" component.node exit address.

Throughout this description, the term "time division multiplexed (TDM)" has been used, for the most part, the signals which are multiplexed will usually be pulse code modulated (PCM) samples. Certain applications are envisaged, however, where the samples will not be pulse code modulated but will be, for example, analogue.

## APPENDIX

to U.S./Canadian Patent Application Serial No. (RO2127)

Application of the Burst Switching Technology to the Defense Communications System by Joseph F. Haughney, Proceedings of the 1983 IEEE Military Communications Conference, Vol. 1, 1983

Performance Evaluation of a Distributed Burst Switched Communications System by J.D. Morse and S.J. Kopec, Jr., 2nd Annual Phoenix Conference on Computers and Communications, 1983 Conference Proceedings, 41-6 1983

A PCM Frame Switching Concept Leading to Burst Switching Network Architecture by E. Fletcher Haselton, IEEE 1983

Application of Burst Switching Technology to the Defense Communications System by Joseph F. Haughney, IEEE Communications Magazine, October 1984, Vol. 2, No. 10

New Switching Concept Integrates Voice and Data Bursts, E.F. Haselton, IEEE Global Telecommunications Conference, Globecom 1984 Conference Record, Communications in the Information Age, Vol. 1, 1984

Dispersed Control Architecture and Specification Compilation of Burst Switching, IEE Conference on Software Engineering for Telecommunication Switching Systems, Eindhoven, 14-18, April 1986 by S.R. Amstutz and R. Duane Packard

Source Routing in Computer Networks, ACM Computer Communications Review, Vol. 7, No. 1, January 1977 by Carl A. Sunshine

Source Routing for Campus-Wide Internet Transport, Local Networks for Computer Communications, published by North-Holland Publishing Company 1981, by J.H. Salter et al

Burst Switching - An Introduction by Stanford R. Amstutz, IEEE Communications Magazine, 1983

## Claims

1. A communications system comprising a plurality of switching nodes (10,12,14,16,18,20,22) interconnected by transmission links, said system being suitable for transporting between a first node (10) and a second node (22) signals (2ii,28) each comprising a message portion (F3-F4) and a header portion (F1-F2), said header portion (F1-F2) being determined before said signal is switched by said first node (10) and characterized by a set of node exit addresses (NEA), said addresses occurring in said header portion (F1-F2) in the same sequence in which said nodes will be encountered by said message portion (F3-F4) in passing between said first node (10) and said second node (22), at least said first node (10) and each node (14,18,20) intermediate said first node (10) and said second node (22) including detector means (128) for detecting in said header portion (F1-F2) a particular node exit address (NEA) and determining therefrom the exit whereby at least said message portion (F3-F4) should leave such node to reach the next node in said sequence.

2. A system as defined in claim 1, further comprising access means (26), associated with said first node (10), for accessing a routing database (46) to obtain said set of node exit addresses (NEA).

3. A system as defined in claim 2, wherein said access means (26) includes signalling means (38,42) for deriving from a destination interface address (RDIA), an address (DIA) of a destination interface (26A) associated with an exit of said second node (22) and means (38,44) for deriving said set of node exit addresses (NEA) to route the transaction signal to such destination interface (26A).

4. A system as defined in claim 3, wherein said means (38,44) for deriving said set of node exit addresses (NEA) serves to access a look-up table (46), using said destination interface address (DIA), to determine said set of node exit addresses (NEA).

5. A system as defined in claim 4, wherein said look-up table (46) comprises a group of sets of node exit addresses (NEA), said group being peculiar to that first node (10) and each set corresponding to a different route to a final node (22) accessible therefrom.

6. A system as defined in claim 2, in which said access means further includes means (44) for deriving said set of node exit addresses (NEA), in its entirety, in dependence upon a destination interface address (DIA) of a destination interface (26A) connected to an exit of said second node (22).

7. A system as defined in claim 6, in which said access means further includes means (38) for generating said destination interface address (DIA) in dependence upon a destination number (DIR.NUM) of a recipient associated with such destination interface (26A).

8. A system as defined in claim 7, in which said means (38) for generating said destination interface address (DIA) serves to do so by accessing a network database (36), said access means (26) further comprising means (44) for responding to said destination interface address (DIA) to access a routing database (46) and provide said set of node exit addresses (NEA).

9. A system as defined in claim 1 further comprising a switch means (128) including detector means (154,158) for detecting in said header a particular node exit address (NEA) and determining therefrom the exit whereby at least said message portion should leave such node to reach the next node in said sequence said switchmeans (128) further including means (150) for allocating said header to a channel in said exit, the arrangement being such that once a channel has been allocated, the remainder of the transaction signal may be routed to it without incurring significant store and forward delay.

10. A system as defined in claim 1, in which both said first node (10) and said second node (22) having access means (26) and destination interface means (26A), said access means (26) of said first node (10) serving to access a routing database (46) using a unique address (DIA) of the destination interface means (26A) of said second node (22), and vice versa, to obtain said set of node exit addresses (NEA), said access means (26) serving further to add an identifier (Figure 15-(1)) to an outgoing transaction signal (2ii) and start a timer (54), and the destination interface means (26A) associated with the same node serving to detect a corresponding identifier (Figure 15(2)) in an incoming transaction signal and stop said timer (54).

11. A system as defined in claim 1 further comprising access means (26), associated with said first node (10), for adding to a transaction signal (2ii) entering the first node (10) an identifier (F2-F3) relating it to a particular call, and yet further comprising destination interface means (26A) associated with said second node (22) for detecting such an identifier in a transaction signal (2ii) received from said second node (22) and relating such received transaction signal (2ii) with a particular recipient (32).

12. A system as defined in claim 1, wherein said first and said intermediate nodes (10,14,18,20) are each adapted to transmit to said exit only said message portion (F3-F4) and such portion of the header portion (F1-F2) as remains after removal of its own one of said set of node exit addresses (NEA).

13. A system as defined in claim 1 further comprising access means (26), associated with said first node (10), for adding to a transaction signal (2ii) entering the first node an identifier (F2-F3) relating it to a particular call, and yet further comprising destination interface means (26A) associated with said second node (22) for detecting such an identifier (F2-F3) in a transaction signal received from said second node (22) and relating such received transaction signal with a particular recipient.

14. A method of operating a communications system comprising a plurality of switching nodes (10,12,14,16,18,20, 22) interconnected by transmission links, said method comprising transporting between a first node (10) and a second node (22) transaction signals (2ii,28) each comprising a message portion (F3-F4) that may be continuous and of a duration determined by a user, and a header portion (F1-F2), said header portion (F1-F2) being determined before the transaction signals are switched by said first node (10) and comprising a set of node exit addresses (NEA) corresponding to the sequence in which at least said message portion (F3-F4) is to tranverse said switch nodes (14,18,20) in passing between said first node (10) and said second node (22), said method further comprising the steps of detecting (128) at least at said first node (10) and each node (14,18,20) intermediate said first node (10) and said second node (22), a particular node exit address (NEA) and determining therefrom the exit whereby at least said message portion (F3-F4) should leave such node to reach the next node in said sequence.

15. A method as defined in claim 14, further comprising the step of accessing a routing database (46), using an address (DIA) of a destination interface (26A) connected to an exit of said second node (22), to obtain said set of node exit addresses (NEA), in its entirety, for combining with said message portion.

FIG. I

0 282 198

**2(i)**

**LINE 34**

| DISCONNECT SIGNALLING | //USER INFORMATION// | CONNECT SIGNALLING |
|---|---|---|

**2(ii)**

**LINE 30**

| IDLE FLAG | F5 | TAIL | F4 | //USER INFORMATION// | F3 | INNER ENVELOPE | F2 | NULL | ... | NEA | F1 | NEA | F1 | IDLE FLAG |
|---|---|---|---|---|---|---|---|---|---|---|---|---|---|---|

MESSAGE PORTION      HEADER PORTION

**2(iii)**

**LINE 59**

| IDLE FLAG | F5 | TAIL | F4 | //USER INFORMATION// | F3 | INNER ENVELOPE | F2 | IDLE FLAG |
|---|---|---|---|---|---|---|---|---|

MESSAGE PORTION

F1 – START TRANSACTION FLAG
F2 – START INNER ENVELOPE FLAG
F3 – START USER INFORMATION FLAG
F4 – END USER INFORMATION FLAG
F5 – END TRANSACTION FLAG
NEA – NODE EXIT ADDRESS

# FIG. 2

## ROUTING TABLE

46 —

| DIA | NEA | NEA | NEA | NEA |
|-----|-----|-----|-----|-----|
| DIA | NEA | NEA | NEA | NEA |

52

**CALL-CONNECTION TABLE**

36

| DIR.NUM. | RDIA | RCHN |
|----------|------|------|
| DIR.NUM. | RDIA | RCHN |

38

**CALL CONTROLLER**

54 — **TIMER**

44

**CONNECTION CONTROLLER**

**CHANNEL ALLOCATOR**

TDM PORT

**MUX**

**DMUX**

48

50

USER INFORMATION

24

**SIGNALLING CONTROL INTERFACE**

**TERMINAL INTERFACE**

42

SOURCE/DEST. TERMINAL 24/32

26 (26A)

# FIG. 3

0 282 198

| F5 | TAIL | F4 | USER INFORMATION | F3 | INNER ENVELOPE | F2 |

DATA/FLAG BITS {

| IDLE FLAG | MESSAGE PORTION | HEADER PORTION | IDLE FLAG |

0 0 0    1 1 1 1 1 1 1 1 1 1 1 1    0 0 0 0 0

CHANNEL ASSOCIATED
SIGNALLING BIT
(SLEEVE BIT)

ACTIVE PATTERN

IDLE PATTERN

0 282 198

# FIG. 4

ARBITRATION BUS — DATA — ARBITRATION BUS — DATA

DISCONNECT REQUEST — DISCONNECT REQUEST

134 — CONNECT REQUEST

108 — RC — 116 — CLOCK — DATA — 132 — 100

FROM NODE INPUTS

X — 128 — 104 — 102 — X — 130 — 106

110 — RC — 118 — CONNECT REQUEST — CLOCK — DATA — 136 — 138

140 — X — 124 — 142 — X — 126

CC — 120 — CC — 122

RC = ROW CONTROLLER
CC = COLUMN CONTROLLER
X = CROSSPOINT CIRCUITRY

112 — 114

TO NODE EXITS

FIG. 5

0 282 198

FIG. 6

0 282 198

FIG. 7

FIG. 8

FIG. 9

FIG. 10

0 282 198

FIG. II

FIG. 12

0 282 198

ARBITRATION BUS ⌐140

⌐FREE/BUSY BIT

DATA BUS ⌐136

SLEEVE BIT

SLEEVE BIT
PATTERN DETECTOR

200 ACTIVE IDLE

202 SLEEVE BIT
STATE MACHINE

HEADER
VALIDITY CHECK ～192

190

DISCONNECT
REQUEST

DISCONNECT
SYNCHRONIZE DELAY ～204

～138

## FIG. 13

FREE/BUSY
-FREE

IDLE
CHANNEL

FREE/BUSY-BUSY
TRANSACTION DETECTED

NEXT NODE ID
COMPARE FAILURE
-DISCONNECT

NEXT NODE ID
COMPARISON

SLEEVE BIT
STABILIZATION

"N" FRAME
DELAY

DELAY
COMPLETE

BUSY
(TRANSACTION)

SLEEVE
PATTERN
BUSY

IDLE PATTERN DETECTED
-DISCONNECT

## FIG. 14

0 282 198

FIG. 15